# EUROPEAN PATENT SPECIFICATION

(11) **EP 3 902 392 B1**
(45) Date of publication and mention of the grant of the patent: **27.03.2024**
(21) Application number: 19842426.9
(22) Date of filing: 16.12.2019
(51) Int. Cl.: A01K 47/02, A01K 47/06, A01K 59/00

(54) **EFFICIENT SYSTEM FOR HARVESTING HONEY DIRECTLY FROM A BEEHIVE**
EFFIZIENTES SYSTEM ZUM DIREKTEN ERNTEN VON HONIG AUS EINEM BIENENSTOCK
SYSTÈME EFFICACE DE RÉCOLTE DE MIEL DIRECTEMENT À PARTIR D'UNE RUCHE

(30) Priority: 24.12.2018 TN 2018000445
(43) Date of publication of application: 03.11.2021
(73) Proprietor: NACHI, Hamza, 8060 Beni Khiar, Nabeul (TN)
(72) Inventor: NACHI, Hamza, 8060 Beni Khiar, Nabeul (TN)
(74) Representative: Mewburn Ellis LLP
(86) International application number: PCT/TN2019/000010
(87) International publication number: WO 2020/139201

(56) References cited:
- EP-A1- 2 793 565
- WO-A1-2016/127217
- WO-A1-2018/079902
- GB-A- 592 090
- US-A1- 2017 280 691

## Description

### Technical field:

The present invention relates to harvesting honey made by bees.

### Prior art:

Honeybees create honey in a beehive. They gather nectar from flowers and bring it back to the hive, where they convert it to honey. The honey is stored and kept in the cells of the honeycomb and used as food, and the cells are carefully sealed with a wax layer when full. The comb is a latticework of hexagonal cells made of beeswax. The bees build honeycomb into frames, which can be removed, inspected, and moved about with ease. A framed comb is a double-sided honeycomb. Each side comprises thousands of cells. A hive box typically contains 6 to 10 frames. A beehive comprises at least two superimposed boxes. The lower box is the brood box, where the queen lays her eggs to raise new brood with the help of the worker bees. The upper box is the honey super, where the bees store the surplus honey that beekeepers, who may also be called apiarists or apiculturists, will harvest. This is in general the traditional method of keeping bees for their honey.

The traditional method of harvesting honey includes many steps that beekeepers have to go through. First, after wearing their protective suit, they open the honey super by removing the outer and inner covers of the beehive to reach the frames. Then they pull out frame by frame and examine the honeycomb from both sides of each one to see whether the stored honey is ready for extraction yet.

The process of making honey starts when the bees collect nectar from foraging field and then deposit it into the comb cells. They add an enzyme to the nectar and set about fanning the cells to evaporate the water content in order to turn the nectar into ripened honey. Once the nectar converts to honey, the bees carefully cap the cells with a white thin layer of wax. That thin layer is an indication that the stored honey is ready for harvest. As beekeepers examine the frames, they may find that several of them are partially capped and ready to eat, while the rest are still about uncapped cells with nectar that is under processing to convert into honey. In this case, beekeepers cannot take these frames to extract honey from them, as the unripe honey is not ready for consumption yet. Therefore, beekeepers can only take the frames whose content is entirely filled with ripened honey, capped from both sides of the honeycomb.

After selecting the frames whose honey is ready for extraction and transporting them to the honey factory, beekeepers scrape the thin layer of wax capping both sides of the honeycomb on each frame using a hot knife or any other sharp tool. This prepares the frames for the next step.

The moment the honey frames are uncapped, beekeepers place them inside the extractor machine. This machine uses centrifugal force to make the honey leave the comb. During the extraction, honey streams on the sides of the extractor barrel and collects at the bottom, and then pours out into a container, where it is filtered from wax particles afterward. Eventually, after all these steps, the result is a clear honey, wax free, ready to eat. Finally, beekeepers take the emptied frames and then return them back into the beehives for a subsequent honey deposit by the bees. These are generally the traditional and most popular ways of harvesting honey, which may require a lot of time and effort.

Harvesting honey is not tied just to traditional methods. In fact, atypical other procedures were proposed in the prior art. These procedures aim to offer a better and easier way to harvest honey without bothering going through almost all the traditional steps mentioned previously.

While these procedures share a similar working principle, they used different designs and techniques. The common working principle they use is a certain mechanism that takes place within an artificial honeycomb wherein, the cells on both sides of said artificial honeycomb can split together at the same time, changing their position from closed to open, causing the honey to leave the frame. Then when the extraction finishes, these cells can return back to their closed position, making the honeycomb ready for the bees to deposit honey again. This process is entirely controlled by beekeepers.

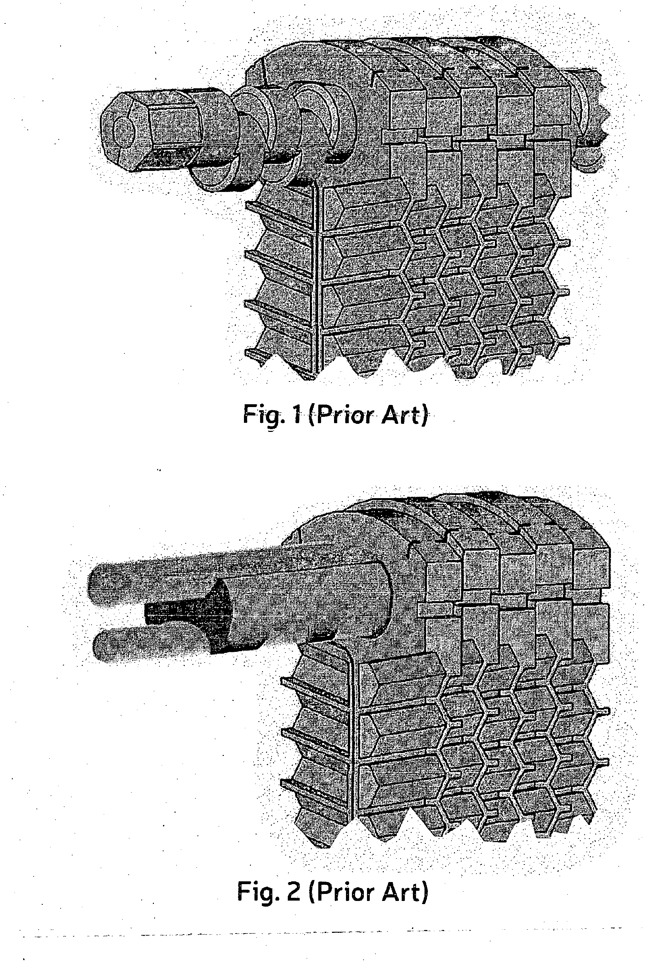

The process of splitting an artificial honeycomb was embodied in several designs. In this matter, we recall an early achievement illustrated in **Figs. 1** and **2****,** which is an example of an artificial honeycomb whose cells can split to eventually harvest honey directly from a beehive.

This artificial honeycomb is composed of a series of identical comb portions movable to each other from a closed-cell position to an open-cell position with the help of a rotary crank as **Fig. 1** shows or inflatable tubes as **Fig. 2** shows.

This example has a basic design structure of a splittable honeycomb that may threaten the safety of the bees during the splitting process, in which, the edges of the cells act like scissors, which may cut the - bees' limbs. Besides, the rotary crank and the pneumatic procedure that triggers the splitting process may not be practical for the average beekeeper, as for the inflatable tube for example that may well not be suitable for the situation of harvesting honey, since the operation is likely to require a compressor source, which is inappropriate and bothersome.

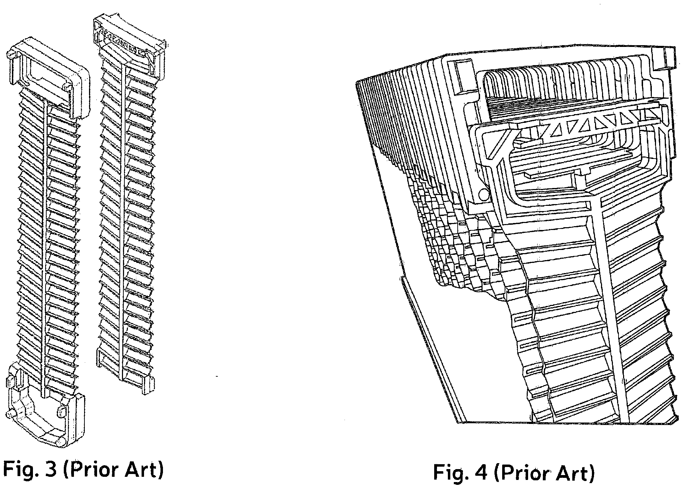

Because of the problems stated above, another example of an artificial honeycomb was proposed, as **Figs. 3** and **4** show. It is also an artificial honeycomb whose cells can split, allowing apiculturists to harvest honey directly from a beehive.

This artificial honeycomb is composed of a plurality of two comb portions, as **Fig. 3** shows, movable to each other from a closed cell position to an open cell position; making all the cells on both sides of the comb split at the same time, causing all the stored honey to leave the frame in a roughly similar way to the first example. Both comb portions shown in **Fig. 3** form small gaps between their cells' edges to prevent catching the bees' limbs when the splitting process occurs. Once the honey leaves the comb, it flows down to a bottom trough embedded within the frame whose role is to receive honey and convey it out of the frame. The position of this trough segment is parallel to the honeycomb above it, so the entire beehive of this prior art example was preferred to be slightly inclined in order to create the necessary slope for the troughs of the frames to be able to convey honey and pour it out. This proposed inclination must be minor. Otherwise, the beehive could be vulnerable to fall on the ground, especially in view of the natural circumstances like wind. However, the less it is inclined the longer it will take the honey to flow out of the frames, sincehoneyis a viscous substance. So, safety and efficiency are not totally achieved in this matter.

Another problem related to this prior example is that it is not easy to use for some part of it due to a mechanical deficiency. This problem becomes obvious during the splitting process. This process is critical since it necessitates cracking an entire honeycomb that comprises thousands of cells on both sides of the frame all at the same time, which makes this alteration stiff and hard to maneuver. It actually causes the user to struggle, as the operation requires high effort to be exerted.

Moreover, this proposed example comes up with a beehive box having sort of removable sides and frontal panels acting as windows allowing to see the frames inside the hive in order to be able to know whether the stored honey is ready for extraction or not, without practically bothering opening the hive and inspecting the frames one by one.

In fact, these windows can only give a limited view at the frames that is not enough for certainty and often gives beekeepers false information about the status of the stored honey. The honeycomb may look full of honey and capped when they are perceived from outside the hive through those windows, but the rest of the honeycomb deep inside the hive that cannot be perceived from the outside, is more likely to be uncapped and filled with unripe honey, which is not ready for consumption yet. Because of that, many users of this prior art example make decisions of extracting honey based solely on what they can see through the hive windows, which means they often extract it sooner than it should be. Having large amount of unripe honey extracted along the way lowers the quality of the honey significantly.

Although the second proposed example in the prior art seems more developed than the aforementioned one, both of them are lacking or overlooking important issues like the ease of use and the end user experience, which may result in having negative effects on the quality of honey produced or even threatens the safety of the bees.

WO2016127217A1 proposes a splittable honeycomb.

### Brief description of the invention:

The purpose of the present invention is to make harvesting honey a more convenient task for the user by providing them with more options to better manage this process, all with keeping the bees safe and maintaining a good-quality honey.

The present invention provides an artificial honeycomb according to claim 1.

An artificial honeycomb frame provided, with splittable hexagonal cells, designed to have two units whose working process is independent from one another. Each unit represents one of the two honeycomb sides that makes up a honey frame. Accordingly, the harvesting process goes by extracting honey from one unit at a time, i.e. extracting honey from one side of a frame at a time.

The provided artificial honeycomb frame is made of six fundamental pieces:
- Fixed Piece
- First Movable Piece
- Second Movable Piece
- Frontal Piece
- Posterior Piece
- Bottom Channel

The Fixed Piece, the First Movable Piece and the Second Movable Piece are fragments of honeycomb. The provided artificial honeycomb frame is, almost entirely, made of these three fragments being repeatedly arranged and assembled together. The Fixed Piece is a double-sided comb fragment, while the First Movable Piece and the Second Movable Piece are just one-sided comb fragments.

The provided artificial honeycomb frame is designed in a way that its Fixed Pieces are arranged and assembled together, holding the First Movable Pieces and the Second Movable Pieces restricted between them. Another way to say, a First Movable Piece and a Second Movable Piece are arranged next to each other, and both of them are arranged between each Fixed Piece and another. And so, the arrangement of the comb fragments of the provided artificial honeycomb frame is organized by having a Fixed Piece, then a First Movable Piece and a Second Movable Piece arranged next to it, followed by another Fixed Piece and another First Movable Piece and a Second Movable Piece arranged the same way and so on. Consequently, this multiple arrangement of these comb fragments results in forming the honey cells.

The First Movable Pieces and the Second Movable Pieces are movable relative to the Fixed Pieces. And since the First Movable Piece and the Second Movable Piece are independent from one another, they both are movable relative to each other too. This movement is of a vertical direction and is limited within a particular range. In other words, the First Movable Pieces and/or the Second Movable Pieces, being arranged between the Fixed Pieces, can move up and down within a small range of about 3 millimeters.

Since the arrangement of the comb fragments forms the honey cells, the movement of the First Movable Pieces and/or the Second Movable Pieces makes those honey cells split, or change position. Originally, the honey cells position is as closed hexagonal volumes. Therefore, moving the First Movable Pieces and/or the Second Movable Pieces up relative to the Fixed Pieces brings the honey cells to split, changing their position from closed to open. Moving the First Movable Pieces and/or the Second Movable Pieces up is a forward mechanism, in which, the honey cells convert into vertical channels, making the stored honey to flow down through them. Eventually, the honey leaves the comb.

Since the proposed artificial honeycomb frame has the First Movable Pieces located on one side of the frame, and the Second Movable Pieces located on the other side, this means that both sides of the frame are independent to one another. Accordingly, their working process is separate from one another too. In this way, the cells on one comb side can split without affecting the cells on the other side, which means that honey can be extracted from only one side of a frame at a time.

Splitting the cells on one comb side of a frame at a time rather than the two sides at once lowers the exerted effort needed to do this operation significantly. First, it is worth mentioning that a honeycomb frame typically comprises about 4000 honey cells in aggregate wherein, 2000 cells are on one side and another 2000 on the other side of a frame. Splitting all these 4000 cells in one hand would be a stiff process because the bees use propolis among the cells which is a substance that acts as a glue, and that needs high effort in order to unbreak those cells, or split them off. Instead, the proposed artificial honeycomb offers the possibility to split one side of a frame at a time, which lowers the exerted effort needed to do this operation significantly, to the point where it removes the stiffness and the struggle encountered during the splitting process. Therefore, extracting honey using the proposed method will be a smooth and much easier process on the user, which is one of the unique features of the present invention.

There is another advantage that could be gained from said feature. Knowing that beekeepers, as they usually inspect the frames to harvest honey, are likely to find several of those frames capped and filled with honey that is ready for consumption on one of their sides, while their opposite sides are partly capped and filled with watery nectar that is not ready for consumption yet. For that, the proposed invention offers beekeepers the possibility to extract only the ripe honey on the capped side, while keeping the other side of the frame that is filled with watery nectar as it is. And so, this feature of extracting each side of a single frame alone can provide beekeepers with more control over the process of harvesting honey as well as maintaining a quality of honey produced, free of watery nectar.

After splitting the cells of one or the two sides of the provided artificial honeycomb frame by applying the forward mechanism, where the First Movable Pieces and/or the Second Movable Pieces move up, the stored honey takes few minutes to clear the honeycomb. Meanwhile, the movable pieces that were moved up are designed to remain stuck in that open-cell position to allow the honey to flow down.

As the forward mechanism is activated and the cells split, the stored honey starts to flow down to the Bottom Channel. The Bottom Channel is one of the components that constitute the provided artificial honeycomb frame, being attached to the honeycomb from the bottom. It has a sloping base that, when receiving the extracted honey from above, it conveys it outside the frame in a horizontal direction. The sloping base of the Bottom Channel is inclined enough to convey the extracted honey within several few minutes. Additionally, the Bottom Channel has a second role, which is holding the comb fragments comprising the artificial honeycomb, keeping them tightly aligned.

After applying the forward mechanism and the honey clears the comb frame, the cells need to be restoredback to their original position, from an-open-position to a closed position. For that, the backward mechanism, which is the reverse of the forward mechanism, will be applied by moving the movable pieces back down to their original position. The backward mechanism brings the cells of the honeycomb back to a closed position where the bees can subsequently deposit honey into them again.

The present invention offers the possibility to extract honey directly from a beehive by using artificial honeycomb frames that give the user more options along with ease of use. Furthermore, the ability to extract honey side by side helps maintain a good quality of honey produced. More technical details of the proposed invention are covered within the preferred embodiment section.

### Brief description of the drawings:

**Figs. 1** and **2** show parts of the first prior art example.
**Fig. 3** shows a pair of pieces constituting the artificial honeycomb of the second prior art example.
**Fig. 4** partly illustrates the artificial honeycomb of the second prior art example.
**Figs. 5A, 5B, 5C** and **5D** are, respectively, a frontal-perspective, frontal, back-perspective and back views of the Fixed Piece of the present invention.
**Figs. 6A, 6B, 6C** and **6D** are, respectively, a frontal-perspective, frontal, back-perspective and back views of the First Movable Piece of the present invention.
**Figs. 7A, 7B, 7C** and **7D** are, respectively, a frontal-perspective, frontal, back-perspective and back views of the Second Movable Piece of the present invention.
**Fig. 8** is a frontal-perspective of the Fixed Piece.
**Fig. 9** is an enlarged frontal-perspective view of the Fixed Piece's header, emphasizing the details of it.
**Fig. 10** is an enlarged frontal-perspective view of the Fixed Piece's footers, emphasizing the details of them.
**Fig. 11** is a back-perspective of the Fixed Piece.
**Fig. 12** is an enlarged back-perspective view of the Fixed Piece's header, emphasizing the details of it.
**Fig. 13** is an enlarged back-perspective view of the Fixed Piece's footers, emphasizing the details of them.
**Fig. 14** is an exploded frontal-perspective view depicting the positioning of the First Movable Piece and the Second Movable Piece relative to each other.
**Fig. 15** is an enlarged exploded frontal-perspective view emphasizing the detail of the First Movable Piece and the Second Movable Piece's headers.
**Fig. 16** is a frontal-perspective view illustrating a pair of Fixed Pieces, a pair of First Movable Pieces and a pair of Second Movable Pieces arranged and assembled together, forming the honey cells on two opposite sides.
**Fig. 17** is an exploded frontal-perspective view depicting a pair of Fixed Pieces, a pair of First Movable Pieces and a pair of Second Movable Pieces and how each of them is positioned for the purpose of forming the comb.
**Fig. 18** depicts a detailed arrangement of the Fixed Piece, the First Movable Piece and the Second Movable Piece from a frontal view wherein, both movable pieces are in their original position, in which, the cells on both comb sides are in a closed position.
**Fig. 19** illustrates a detailed arrangement of the Fixed Piece, the First Movable Piece and the Second Movable Piece from a frontal view wherein, the First Movable Piece has been moved up relative to both the Fixed Piece and the Second Movable Piece, changing the position of the cells on its side from closed to open, while the cells on the other comb side corresponding to the Second Movable Piece remain in their original position.
**Fig. 20** shows a detailed arrangement of the Fixed Piece, the First Movable Piece and the Second Movable Piece from a frontal view wherein, the Second Movable Piece has been moved up relative to the Fixed Piece and the First Movable Piece, changing the position of the cells on its sidefrom closed to open, while the cells on the other comb side corresponding to the First Movable Piece remain in an open position without being affected in any way.
**Fig. 21** depicts a detailed arrangement of the Fixed Piece, the First Movable Piece and the Second Movable Piece from a frontal view wherein, the First Movable Piece has been moved down relative to both the Fixed Piece and the Second Movable Piece, restoring the cells on its side back to a closed position, while the cells on the other comb side of the Second Movable Piece remain in an open position.
**Fig. 22** is a detailed arrangement of the Fixed Piece, the First Movable Piece and the Second Movable Piece from a frontal view wherein, the Second Movable Piece has been moved down relative to the Fixed Piece and the Second Movable Piece, restoring the cells on its side back-to a closed -position, and with that, the-cells on both comb sides are back to their original position.
**Fig. 23** is a side view of the Fixed Piece and the First Movable Piece being arranged together in a closed-cell position.
**Fig. 24** is an enlarged side view on a fraction of the Fixed Piece and the First Movable Piece being arranged in a closed-cell position, emphasizing the gap of a "Y" Shape between the edges of the cells.
**Fig. 25** illustrates a side view of the Fixed Piece and the First Movable Piece being arranged together in an open-cell position.
**Fig. 26** **is** an enlarged-side view on a fraction of-the Fixed Piece and the First-Movable Piece being-arranged-in an open-cell position, showing that the First Movable Piece has been moved up, or split, resulting in changing the cells' position from closed to open.
**Figs. 27A, 27B, 27C, 27D** and **27E** are, respectively, a frontal-perspective, frontal, side, back-perspective and back views of the Frontal Piece.
**Figs. 28A, 28B, 28C, 28D** and **28E** are, respectively, a frontal-perspective, frontal, side, back-perspective and back views of the Posterior Piece.
**Figs. 29A** and **29B** are, respectively, a side and a perspective views of the Bottom Channel.
**Fig. 30** is a full perspective view of the artificial honeycomb frame of the present invention whose fundamental pieces are arranged and assembled together, accompanied by two caps for the header and a lid for the Bottom Channel.
**Fig. 31** is a sectional view of the Bottom Channel and a part of the Fixed Piece, emphasizing the detail of how- these -two -pieces are assembled and attached to each other.
**Figs. 32A** and **32B** are, respectively, a frontal elevation and a sectional view of the bar tool that is used to move the movable pieces up and down.
**Fig. 33** is a perspective view showing the bar tool being inserted inside the lower slot corresponding to the Second Movable Pieces wherein, the First Movable Pieces and the Second Movable Pieces are in their original position, i.e. closed-cell position.
**Fig. 34** is a perspective view showing the bar tool inside the lower slot corresponding to the Second Movable Pieces being rotated by 90°, causing those pieces to move up, resulting in splitting that comb side, changing the position of its cells to an open position.
**Figs. 35A, 35B** and **35C** are, respectively, a frontal-perspective, side and back-perspective views of the lid of the Bottom Channel that is designed to leak honey as it plugs the opening of the Bottom Channel.
**Fig. 36** is a sectional perspective view of a part of the plugged Bottom Channel, emphasizing how the small amount of honey remaining inside the Bottom Channel after extraction leaks out.
**Fig. 37****,** not falling under the claimed invention, is an exploded perspective of a beehive whose outer cover is removed to inspect the frames inside its honey super, and whose frontal panels are also removed to uncover the headers of the frames and the openings of the Bottom Channels to be able to split their honeycomb with the bar tool and receive the honey that gets out through the Bottom Channels.
**Fig. 38****,** not falling under the claimed invention, is a partial perspective view- of the-front of a beehive, showing the setup of the shelf that will support the containers of honey, when the honey flows out of the frames and pours directly into them.
**Fig. 39****,** not falling under the claimed invention, is a perspective view of a beehive containing several artificial honeycomb frames inside its honey super wherein, the honey inside two of its frames is being extracted by falling into the Bottom Channels then flowing through the tubes, ending up pouring inside the containers sitting on the shelf.

### Detailed description of the preferred embodiment:

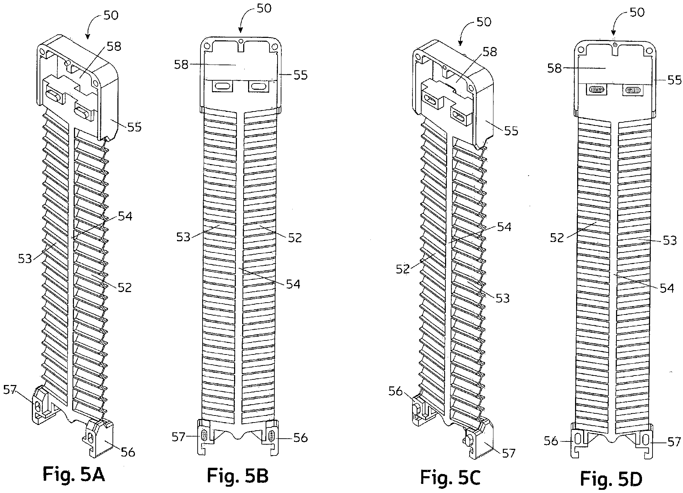

**Figs. 5****,** **6** and **7** show the Fixed Piece **50,** First Movable Piece **60** and the Second Movable Piece **70** respectively from various perspectives. These three pieces are comb fragments and are the foundation of the splittable honeycomb system. Each piece of them comprises three elements.

The Fixed Piece **50** shown in **Fig. 5** comprises a comb, a header and two footers. The comb of the Fixed Piece is formed with two sides: **52** and **53** as indicated in **Fig. 5****.** Both comb sides are symmetrical to each other according to the dividing axis **54** between them. The comb exists on the frontal surface (**Figs. 5A** and **5B**) as well as on the back surface (**Figs**. **5C** and **5D**) of the Fixed Piece **50.**

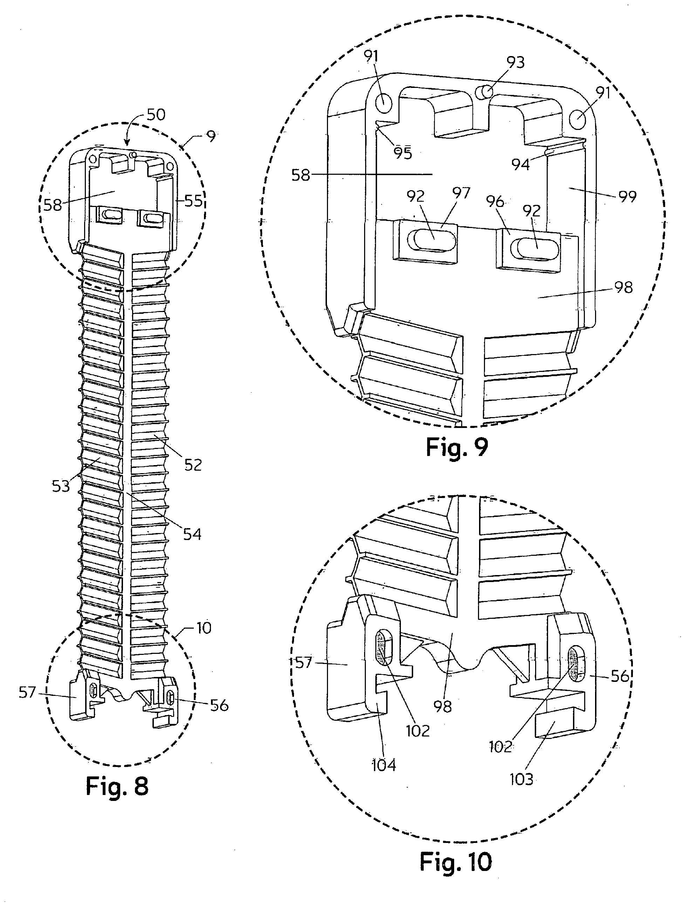

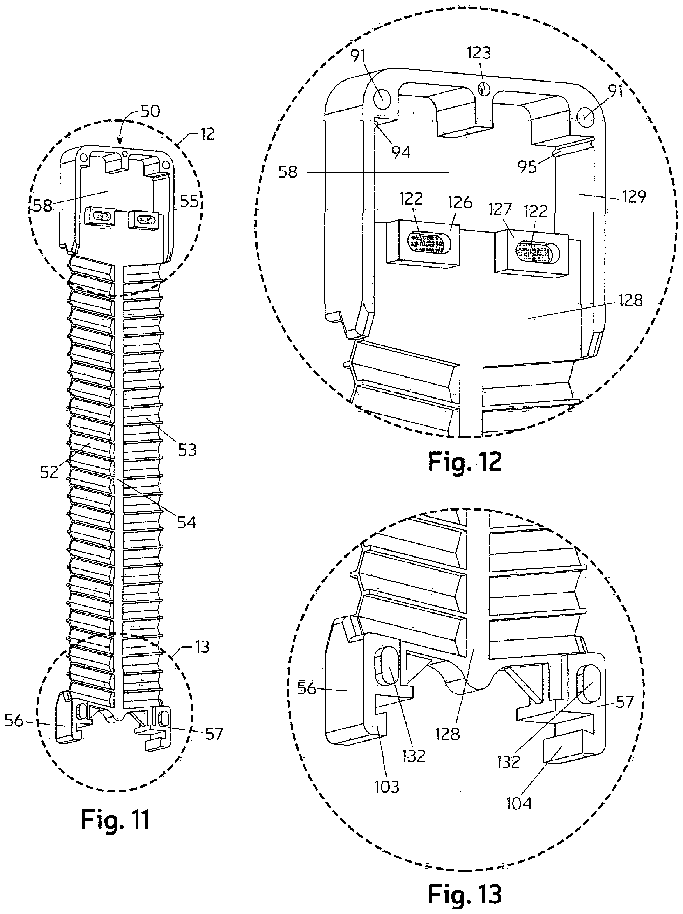

The Fixed Piece **50** shown in **Fig**. **5** is formed with a header **55** and two footers **56** and **57.** The header **55** comprises a particular hollow shape **58** and two identical small holes **91** at the top corners as indicated in **Figs. 9** and **12****,** penetrating the full depth of the header **55.**

The Fixed Piece **50** is formed with gendered connections on its header **55** (male and female type of mechanical assembly), and two footers **56** and **57.** **Fig. 9** shows three protrusions (male): two identical protrusions **92** and an upper protrusion **93** centered at the top of the header. These three protrusions are mating with three indentations (female) illustrated in detail in **Fig. 12** with an enlarged back perspective view wherein, the two identical indentations **122** correspond to the protrusions **92,** and the upper indentation **123** corresponds to the protrusion **93.**

Same type of connection is formed at the level of the two footers **56** and **57** wherein**,** two identical-indentations **102** illustrated in detail with an enlarged frontal perspective view in **Fig. 10** mating with two identical protrusions **132** illustrated in detail with an enlarged back perspective view in **Fig. 13****.**

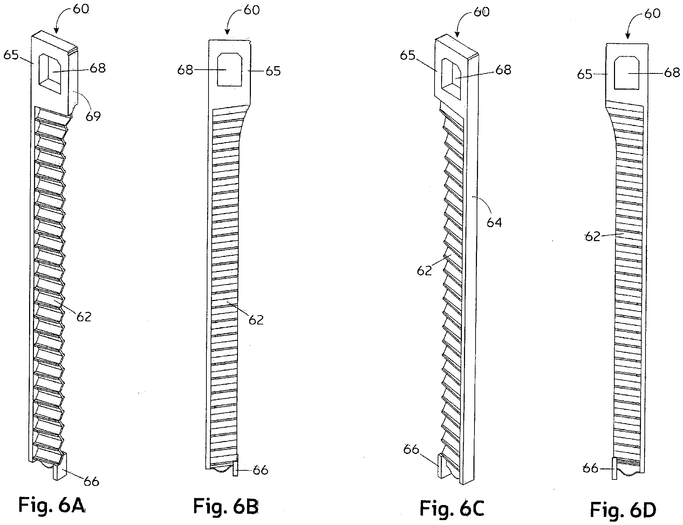

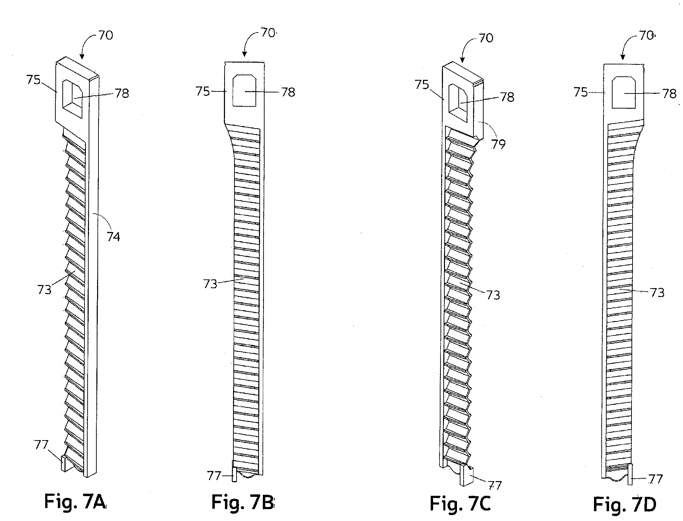

The First Movable Piece **60** illustrated in **Fig. 6** and the Second Movable Piece 70 illustrated in **Fig. 7** comprise three elements on each of them: a comb, a header and a footer. As **Fig. 6** and **7** illustrate, both pieces are entirely symmetrical to each other. The comb on each piece represents only one comb side. The comb **62** in **Fig. 6** indicates the comb of the First Movable Piece **60,** which corresponds to the comb side **52** of the Fixed Piece **50,** illustrated in **Fig. 5****.** The comb **73** in **Fig. 7** indicates the comb side of the Second Movable Piece **70,** which corresponds to the comb side **53** of the Fixed Piece **50,** illustrated in **Fig. 5**. The combs **62** and **73** are formed on the frontal surfaces (**Figs**. **6A**, **6B****,** **7A** and **7B**) as well as the back surfaces (**Figs**. **6C, 6D****,** **7C** and **7B**) of the two pieces **60** and **70**.

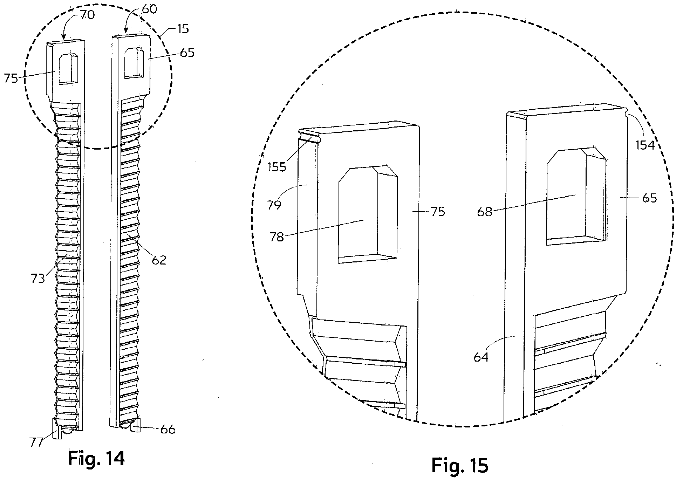

**Fig. 6** shows the First Movable Piece **60** formed with a header **65,** and **Fig. 7** shows the Second Movable Piece **70** formed with a header **75.** Both headers are also illustrated together in detail in **Fig. 15****.** This figure shows that both headers are formed with particular hollow shapes, **68** for the First Movable Piece and **78** for the Second Movable Piece. Moreover, both headers **65** and **75** comprise small horizontal indentations **154** and **155** on their side surfaces **69** for the First Movable Piece and **79** for the Second Movable Piece. Both indentations correspond to the protrusions **94** and **95** on the Fixed Piece's header **55** illustrated in **Figs .9** and **12** in detail.

The First Movable Piece **60** is formed with a footer **66** and the Second Movable Piece **70** is formed with a footer **77.** Both footers **66** and **77** correspond respectively to the footers **56** and **57** of the Fixed Piece **50.**

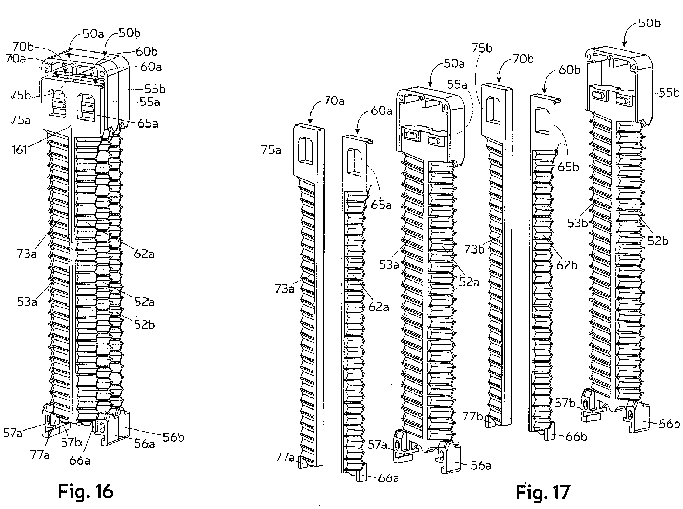

As mentioned previously in the brief description of the invention, the proposed artificial honeycomb frame comprises an array of the pieces **50, 60** and **70** being arranged together. **Figs. 16** and **17** show in-perspective and exploded views a sample of that array demonstrated on a pair from each piece (**50a** and **50b, 60a** and **60b, 70a** and **70b**), revealing how those pieces forming the artificial honeycomb are positioned, arranged and assembled together.

The back sides of the two Movable Pieces **60a** and **70a** are positioned on the frontal side of the Fixed Piece **50a** until the back surfaces of both Movable Pieces touches the surface **98** of the Fixed Piece's front. The First Movable Pieces **60a** and **60b** are positioned on the comb sides **52a** and **52b** respectively of the Fixed Pieces **50a** and **50b,** and the Second Movable Pieces **70a** and **70b** are positioned on the comb sides **53a** and **53b** of the Fixed Pieces **50a** and **50b.** Arranged together as **Figs. 16** and **17** illustrate, both Movable Pieces **60a** and **70a** will be positioned in a way that their headers **65a** and **75a** combined will meet the header **55a** of the Fixed piece. Also, the First Movable Piece's comb **62a** will meet the comb side **52a** of the Fixed Piece, and the Second Movable Piece's comb **73a** will meet the comb side **53a** of the Fixed Piece. Likewise, the footer **66a** of the First Movable Piece will meet the footer **56a** of the Fixed Piece and the footer **77a** of the Second Movable Piece will meet the footer **57a** of the Fixed Piece. Same positioning applies to the First Movable Piece **60b** and Second Movable Piece **70b** in relation with the Fixed Piece **50b.** Moreover, the First Movable Piece **60a** as well as **60b** are positioned in a way that the protruded rectangle **96** of the Fixed Piece's header illustrated in **Fig. 9** fits inside the opening **68,** and the surface **69** of the First Movable Piece illustrated in **Fig. 6A** touches the surface **99** of the header **55** shown in **Fig. 9****.** Similarly on the other side, the Second Movable Piece **70** is positioned in a way that the protruded rectangle **97** of the Fixed Piece's header illustrated in **Fig. 9** fits inside its opening **78,** and the surface **79** of the Second Movable Piece illustrated in **Fig. 7C** touches the surface **129** of the header **55** illustrated in **Fig. 12****.** In this way, when an array of the three pieces **50, 60** and **70** are arranged according to these positions, both the First Movable Pieces **60** and the Second Movable Pieces **70** will be touching each other from their flat surfaces **64** and **74,** sharing a surface of contact **161** as shown in **Fig. 16****.**

The positioning of the movable pieces on the back of the Fixed Piece reverses, where the frontal sides of the Movable Pieces **60b and 70b** (also illustrated in **Fig. 6A, 6B****;** **7A** and **7B**) meet the back side of the Fixed Piece **50a**, touching its surface **128,** and the back sides of the Movable Pieces **60b** and **70b** (also illustrated in **Fig. 6C, 6D****,** **7C** and **7D**) meet the frontal side of the Fixed Piece **50b**, touching its surface **98.** In the same way, the frontal side of the combs **62b** and **73b** of the Movable Pieces **60b** and **70b** meet the back side of the combs **52a** and **53a** of the Fixed Piece **50a** respectively, and the back side of the combs **62b** and **73b** of the Movable Pieces **60b** and **70b** meet the frontal side of the combs **52b** and **53b** of the Fixed Piece **50b** respectively. Accordingly, the frontal side of the footers **66b** and **77b** of the Movable Pieces **60b** and **70b** meet the back side of the footers **56a** and **57a** of the Fixed Piece **50a**, and the back side of the footers **66b** and **77b** of the Movable Pieces **60b** and **70b** meet the frontal side of the footers **56b** and **57b** of the Fixed Piece **50b.**

Staying with **Figs. 16** and **17****,** the sample of the array formed by a pair of the pieces **50, 60** and **70** that these figures show also indicates the positioning of a Fixed Piece **50a** relative to another similar Fixed Piece **50b.** As the back side of the Fixed Piece **50a** is being assembled to the frontal side of another Fixed Piece **50b** as illustrated in **Fig. 16****,** the gendered connections mentioned previously will connect and keep the Fixed Pieces attached to themselves and immovable. That's why the pieces **50** are preferred to be called Fixed Pieces. In this way, the two identical protrusions **92** on the frontal side of the header **55b** of the Fixed Piece **50b** will meet with the two identical indentations **122** on the back side of the header **55a.** Similarly, the protrusion **93** on the frontal side of the header **55b** of the Fixed Piece **50b** will meet with the indentation **123** on the back side of the header **55a.** In the same way, the two identical protrusions **132** on the back side of the footers **56a** and **57a** of the Fixed Piece **50a** join with the two identical indentations **102** on the frontal side of the footers **56b** and **57b** of the Fixed Piece **50b.** All these gendered connections contribute in assembling the Fixed Pieces to themselves. This assembly also makes the two identical holes **91** on the Fixed Pieces' headers get together. Moreover, the position in which the Fixed Pieces **50a** and **50b** are arranged leaves a particular empty space between the frontal side of one and the back side of another, which is exactly where the First Movable Piece **60** and the Second Movable Piece **70** are designed to take place. In other words, as in **Fig. 16****,** the First Movable Piece **60b** is restricted between the Second Movable Piece **70b** and the two Fixed Pieces **50a** and **50b.** Also, in a similar way the Second Movable Piece **70b** is restricted between the First Movable Piece **60b** and the two Fixed Pieces **50a** and **50b.**

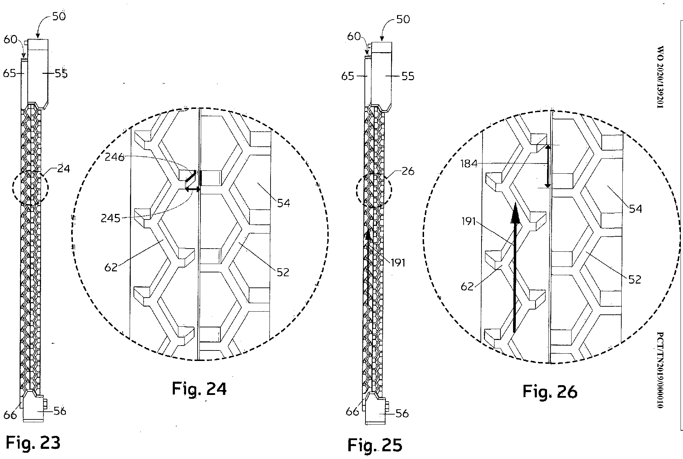

Joining a multitude of the Pieces **50, 60** and **70** together and arranging them in the way described above results in forming the honey cells. More closely, the honey cells of the proposed artificial honeycomb with their identical hexagonal volumes are formed when the comb of a movable piece joins with the comb of a Fixed Piece. This cells formation is visible from a side view of the artificial honeycomb, which is demonstrated on a Fixed Piece **50** and a First Movable Piece **60** in **Fig. 23****,** as well as in a partial detail figure of the combs **52** and **62** of both pieces illustrated in **Fig. 24****,** showing how those comb sides cooperate together in forming the honey cells. In this way, the comb sides **52** and **62,** as well as the comb sides **53** and **73** on the other side are symmetrical to each other in a way that when joining them together, as **Figs. 23** and **24** depict, they form a vertical row of closed hexagonal volumes between them, which eventually represent the honey cells.

As **Fig. 24** illustrates, the formation of the vertical row of honey cells between the comb sides **52** and **62** defines small gaps **245** between the edges of the cells. These gaps are of a "Y" shape as the bold lines **246** highlight on one of those gaps. These gaps are formed in order to provide a certain play between the combs of the movable pieces and the comb sides of the Fixed Piece, keeping the splitting process, as it is described in the upcoming lines, to occur in a smooth way. The bees, however, will seal those gaps using their wax, so that the cells become ready for storing honey.

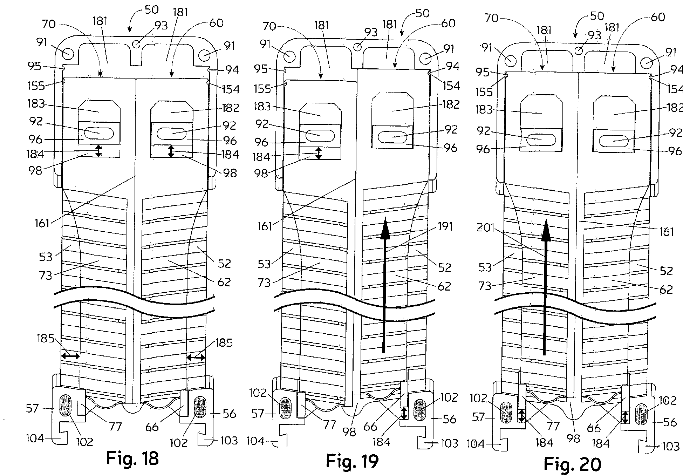

Moving to **Figs. 18, 19, 20****,** **21** and **22** which are a sequence of figures showing in frontal views how a First Movable Piece **60** and a Second Movable Piece **70** operate when they are positioned next to each other within the enclosed areas between the Fixed Pieces. Despite the fact that both Movable Pieces **60** and **70** are surrounded by the Fixed Piece's header **55** from the top and the footers **56** and **57** from the bottom, they are both able to move vertically; up and down, within a particular range of about 3 millimeters in that particular area between the Fixed Pieces. That's why both Pieces **60** and **70** are preferred to be called Movable Pieces. Besides, both Movable Pieces **60** and **70** have identical moving range indicated with the arrow **184** and each piece's movement has no effect on the other one in any way. The sequence of **Fig. 18,19, 20****,** **21** and **22** demonstrates exactly that, where in **Fig. 18****,** illustrating the original position, the First Movable Piece **60** and the Second Movable Piece **70** are at-rest, having the same position. In **Fig. 19****,** the arrow **191** indicates that the First Movable Piece **60** has been moved up, or elevated relative to both the Fixed Piece **50** and to the Second Movable Piece **70** in a straight trajectory within a particular range indicated with the arrow **184,** while the Second Movable Piece **70** remained unaffected in its original position. The arrow **201** in **Fig. 20** shows how the Second Movable Piece **70** has also been moved up or elevated relative to the Fixed Piece **50** the same way as the First Movable Piece **60** within the same range indicated with the arrow **184.** Now, in this situation as **Fig. 20** depicts, both Movable Pieces **60** and **70** were moved up within the same range and with similar trajectories. This particular movement is preferred to be called the forward mechanism.

The forward mechanism is the mechanism where the honey cells go from a-closed position to an opemposition: This very mechanism defines the splitting process. As mentioned above, **Fig: 18** shows from a frontal view that the Movable Pieces **60** and **70** are in their original position at-rest in which the cells are in a closed position. This closed-cell position could be perceived better from a side view, as **Figs. 23** and **24** illustrate. In **Fig. 19****,** the forward mechanism was applied on the First Movable Piece **60** that gets elevated within the particular range **184** and according to the trajectory of the arrow **191.** As a result of this movement, the cells between the combs **52** and **62** switch from a closed position to an open position. While **Fig. 19** illustrates this transition from a frontal view, **Fig. 25** illustrates it from a side view, showing how the First Movable Piece **60** has been moved up relative to the Fixed Piece **50,** indicated with the arrow **191**. Moreover, **Fig. 26** partly illustrates a detailed side view of the combs **52** and **62** showing how when the First Movable Piece whose comb **62** gets elevated according to the direction of the arrow **191,** within the range **184,** the honey cells between those comb sides split, or open up.

While applying the forward mechanism on the First Movable Piece **60** wherein, the cells between the comb sides **52** and **62** switch from a closed position to an open position, the Second Movable Piece **70** remains in its original position without being affected, and the cells between the comb sides **53** and **73** staying in a closed position. Moving to **Fig. 20****,** which illustrates the application of the forward mechanism on the Second Movable Piece **70,** elevating it according to the direction of the arrow **201** within the same range **184.** In this way, the cells between the comb sides **53** and **73** change position from closed, as **Fig. 23** and **24** show in detail, to open, as **Fig. 25** and **26** illustrate in detail as well. Now, staying on **Fig. 20** which illustrates both Movable Pieces **60** and **70** being elevated, leading the honey cells on the two comb sides to an open position.

Supposing that the honey cells, being in a closed position as in **Fig**. **18**, are filled with honey that is ready to get extracted. The way to get the honey out of the cells then is to split those cells, simply by applying the forward mechanism on the chosen comb side, which changes the cells position from closed to open, as described above. Doing so causes the honey stored inside the opened cells to leave those cells, flowing down under the force of gravity. For instance, elevating the First Movable Piece **60,** as **Fig. 19** depicts, causes the honey stored in the cells between the comb sides **52** and **62** to leave those cells, flowing down under the force of gravity. Meanwhile, the honey that is potentially stored in the cells between the comb sides **53** and **73** remains untouched as it is. So, unless a movable piece gets elevated, the stored honey will remain stored as it is without being affected in any way.

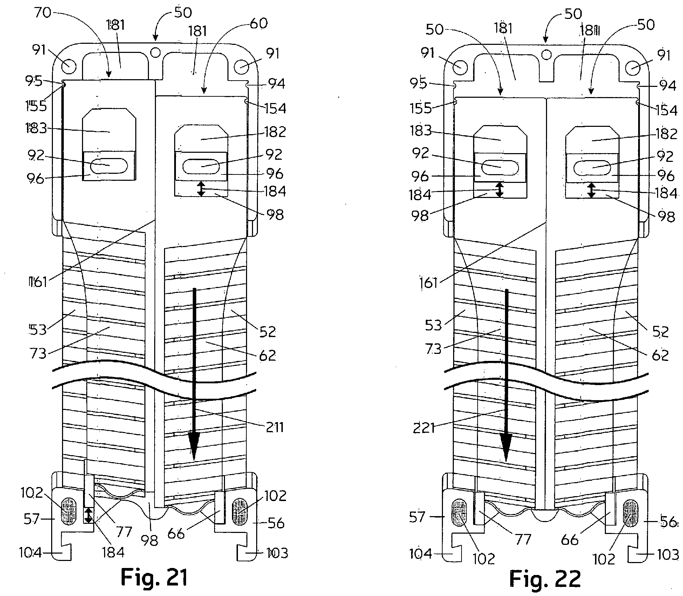

Once the forward mechanism is applied to one of the movable pieces **60** or **70** or both of them and the cells become open, the stored honey starts to leave the comb, which is a process that takes few minutes until the honey clears the comb. When the comb is emptied, it becomes time to apply the backward mechanism. The backward mechanism is the opposite of the forward mechanism. The backward mechanism is the mechanism where the honey cells go from an open position to a closed position. So, the backward mechanism is the reverse of the splitting process. For example, supposing that both Movable Pieces **60** and **70** are elevated with their cells being in an open position and the stored honey took its way out of the comb, just as **Fig. 20** illustrates, the cells then should return to their original position by applying the backward Mechanism on the Movable Pieces **60** and **70.** For that, the arrow **211** in **Fig. 21** indicates the direction in which the First Movable Piece **60** has been moved, which is a higher to a lower movement, where the cells between the comb sides **52** and **62** switch from an open position to a closed position back again, i.e. returning back to the original position. Furthermore, according to **Fig. 21****,** as the backward mechanism is applied on the First Movable Piece **60,** the Second Movable Piece **70** remains unaffected in its open-cell position. So, whether it is the forward mechanism or the backward mechanism being applied, both Movable Pieces **60** and **70** remain independent to each other and their working processes remain separate from one another.

**Fig. 22****,** which is the last figure in this sequence, depicts the Second Movable Piece **70** being moved down according to the arrow **221,** resulting in switching the cells between the comb sides **53** and **73** from an opened position to a closed position back again. In this situation, both the First Movable Piece **60** and the Second Movable Piece **70** return back to their original position, allowing the bees to subsequently refill the cells with honey, and the cycle repeats itself. Both the forward mechanism and the backward mechanism can be applied at will by the user of the present invention, which is a process that will be covered in further detail in the remaining embodiment description.

The honey cells of this proposed invention are designed with a particular inclination of about 8°, as illustrated in the figures showing the Fixed Piece **50,** the First Movable Piece **60** and the Second Movable Piece **70** from a frontal view. This inclination prevents the honey from flooding outside the frame when stored and while being extracted.

Also, the honey cells are designed in a way that the depth of the movable pieces' combs is shorter than the depth of the Fixed Piece's comb. The difference between the two depths is indicated with the arrows **185** in **Fig. 18****.** This feature is used to protect the bees from getting harmed or squeezed when they are potentially located inside the cells during the splitting process. Additionally, the bees will use their wax to complete building the combs **62** and **73** of the movable pieces to become level with the Fixed Pieces.

As described earlier, a Fixed Piece **50** comprises two protrusions **94** and **95** in its header **55**, as shown in **Figs. 9** and **12****.** Also, a First Movable Piece **60** has an indentation **154** and a second Movable Piece **70** has a similar indentation **155** on their headers **65** and **75** as **Fig. 15** shows in-an-enlafaed-perspective-view of the two headers. As **Fig. 19** illustrates, when applying the forward mechanism on the First Movable Piece **60** for example, and this piece gets elevated resulting in splitting the comb and the stored honey starts to leave the cells, the indentation **154** in the First Movable Piece's header meets the protrusion **94** in the Fixed Piece's header, which is some kind of a snap-fit assembly. Same thing with the Second Movable Piece **70** whose indentation **155** meets the protrusion **95** when if gets elevated, as **Fig. 20** illustrates. This snap-fit assembly is used to make the First Movable Piece **60** and the Second Movable Piece **70** remain stuck in that open-cell position, and that's the purpose of those protrusions and indentations. Then, when applying the backward mechanism on the First Movable Piece **60** for example, as **Fig. 21** shows, the indentation **154** and the protrusion **94** can be parted away from each other easily.

Referring again to **Fig. 18****,** arranging the Fixed Piece **50,** the First Movable Piece **60** and the Second Movable Piece **70** together creates three distinct slots at the headers level. An upper slot **181** and two lower slots **182** and **183.** Arranging and assembling a multitude of the pieces **50, 60** and **70** together makes the slots **181,182** and **183** become deeper, like straight tunnels.

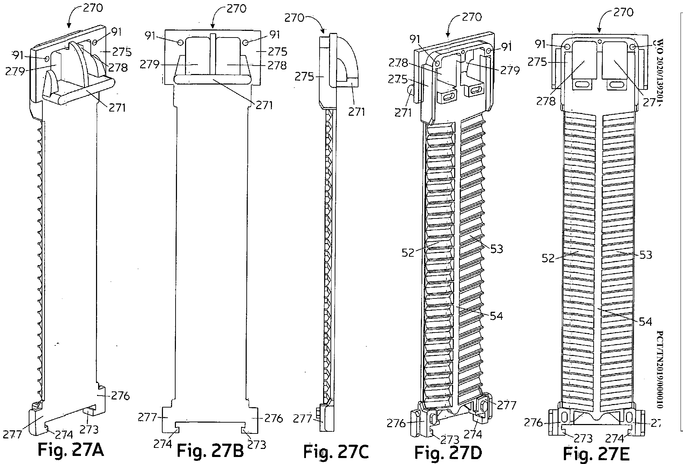

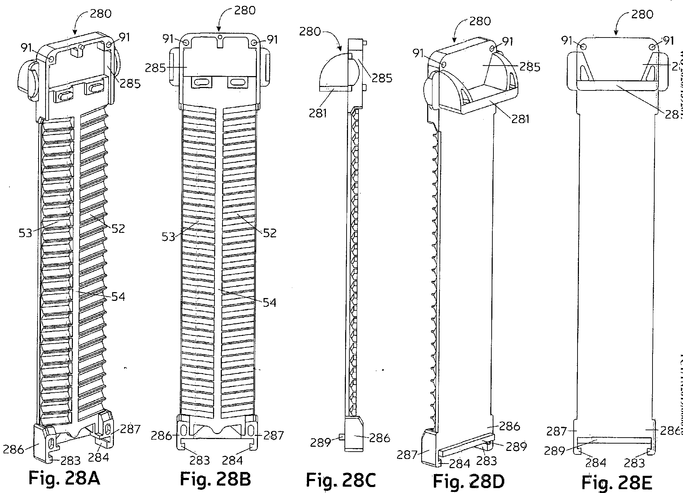

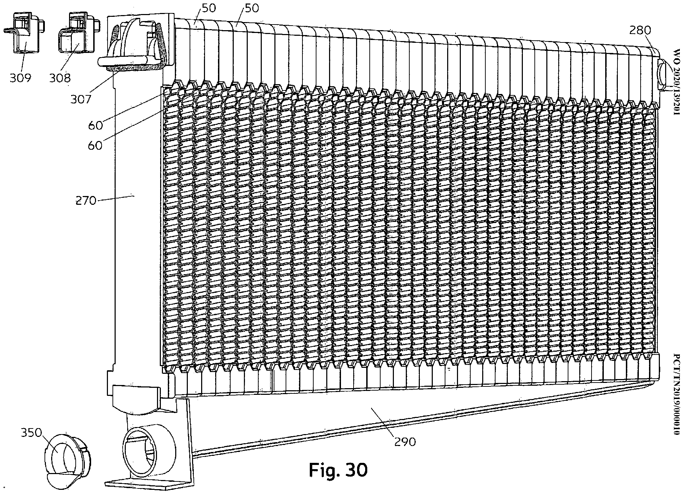

**Figs. 27** and **28** respectively illustrate the two remaining pieces constituting the artificial honeycomb system; The Frontal Piece **270** and the Posterior Piece **280.** These two pieces are complementary to an array of the Pieces **50, 60** and **70** wherein, the Frontal Piece **270** is positioned in one end of that array and the Posterior Piece **280** is positioned in the other end. **Fig. 30** illustrates this positioning and arrangement between these pieces.

The Frontal Piece **270** has a header **275** with two openings **278** and **279.** The opening **278** corresponds to the slot **182** as well as to a part of the upper slot **181.** The opening **279** on the other side corresponds to the slot **183** as well as to the other part of the upper slot **181.** Both openings have a lid for each as shown in **Fig. 30****:** lid **308** for the opening **278** and lid **279** for the opening **279.** Both lids can cap those opening and can be uncapped as well. **Figs. 27A, 27B** and **27C** show that the header **275** has a particular protruded component **271** on the frontal side of the piece **270.** The Posterior Piece **280,** on the other hand, has roughly the same protruded component **281** on the back side of its header **285,** as it is shown in **Figs. 28C, 28D** and **28E****.** These protruded components **271** and **281** permit the whole artificial honeycomb frame to be hanged inside the beehive box. In other words, the entire frame sits on the protruded components **271** and **281.** The rest of the frontal side of the Frontal Piece **270** and the back side of the Posterior Piece **280** are flat surfaces, as **Figs. 27A, 27B** and **Figs. 28D, 28E** show.

The back side of the Frontal Piece **270** illustrated in **Figs. 27D** and **27E****,** is similar to the back side of the Fixed Piece **50.** Also, the frontal side of the Posterior Piece **280** illustrated in **Figs. 28A** and **28B** is similar to the frontal side of the Fixed Piece **50** wherein, the Frontal Piece **270** and the Posterior Piece **280** are to be assembled directly to the Fixed Pieces constituting the artificial honeycomb.

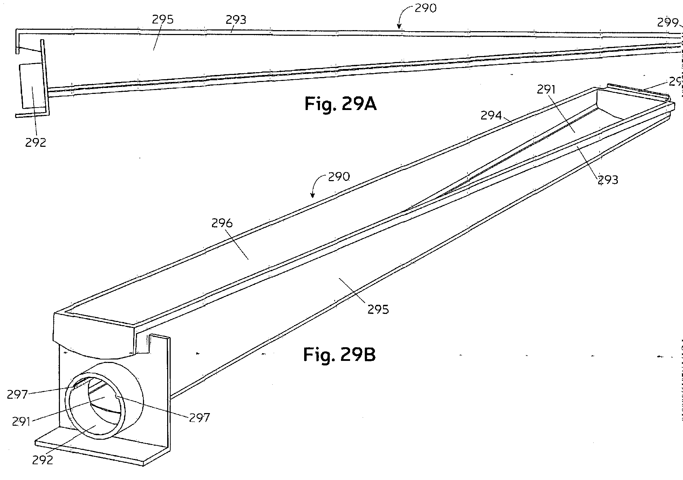

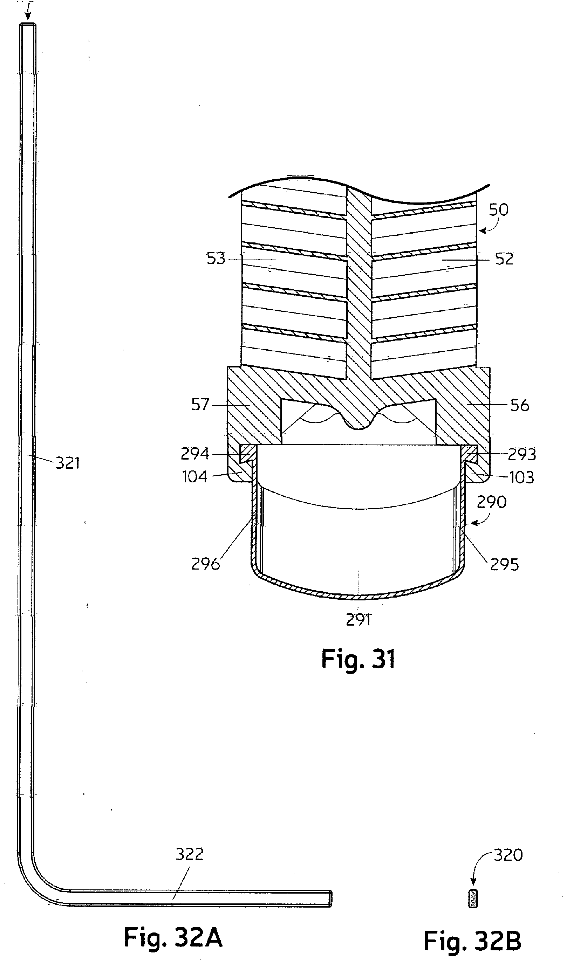

Moving to **Fig. 29A** and **29B** illustrating the Bottom Channel **290.** The Bottom Channel is positioned at the bottom of the frame and assembled to the comb fragments above it and it has two main roles. The first role is to hold the whole assembled array of honeycomb fragments composed of the pieces **50, 60, 70, 270** and **280,** keeping them tightly arranged and aligned from the bottom. **Fig. 31** is a sectional view illustrating how the Bottom Channel **290** can be assembled to an array of Fixed Pieces **50** from above it wherein, the edges **293** and **294** of the Bottom Channel **290** and the edges **103** and **104** of the Fixed Piece's footers are formed with some sort of hooks, or curled shapes, creating a specific type of mechanical assembly between the Bottom Channel and the array of Fixed Pieces for the purpose of keeping the whole pieces of the frame together. This type of assembly allows the array of Fixed Pieces to grab the Bottom Channel. At the same time, the Bottom Channel keeps the array of the comb fragments aligned and tight. The reason why the edges **293** and **294** of the "Bottom Channel **290** and the edges **103** and **104** of the Fixed Piece are preferred to be like hooks and not just with simple right angles is because the Bottom Channel's side walls **295** and **296** are vulnerable to get warped over time, and so the assembly between the edges **293** and **294** of the Bottom Channel and the edges **103** and **104** of the Fixed Piece **50** prevents the Bottom Channel's sides from getting warped.

The second role of the Bottom Channel **290** is it receives the honey that gets extracted from the cells after splitting either one side or the two sides of the honeycomb. Then, due to its sloping surface **291,** the honey flows on it and runs toward the drainage opening **292,** were it eventually leaves the frame.

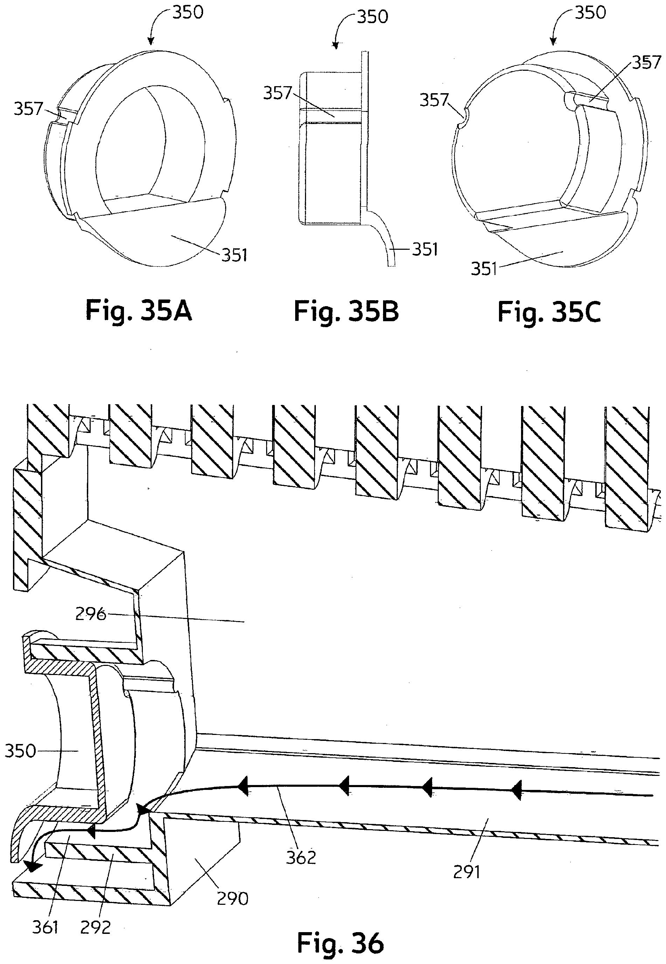

The Bottom Channel's drainage opening **292,** through which honey leaves the frame, has a particular lid **350** illustrated with various perspective views in **Figs**. **35A, 35B** and **35C**. This lid is used to plug the drainage opening **292** of the Bottom Channel, and it can be unplugged as well whenever needed. To be more accurate, when the lid **350** plugs the opening **292,** it leaves a tiny gap **361** beneath it, as shown through a sectional perspective view in **Fig**. **36**. The lid **350** has a particular form wherein, its two indentations **357** correspond to the protrusions **297** inside the drainage opening **292.** Consequently, when the lid **350** plugs the drainage opening **292,** it will be unable to rotate inside, which keeps the gap **361** always at the bottom of the drainage opening **292.** The gap **361** has a well determined purpose, which is to let the remaining of the honey stuck in the sloping surface **291,** after the extraction process ends, to flow and leak through it, following the path **362** shown in **Fig. 36****.** This procedure allows the bees to feed from that remaining honey as it leaks out and it also keeps the Bottom Channel **290** clean and clear of honey. Moreover, the lowest part **351** of **the lid 350** prevents the bees from entering through the gap **361,** and it also acts as a shield to prevent any sort of unwanted particles from penetrating to the Bottom Channel.

Referring now to **Fig. 30****,** which illustrates a full perspective view of the proposed artificial honeycomb frame of the present invention, being composed of an array of the comb fragments **50, 60** and **70** along with the pieces **270** and **280** forming the splittable honeycomb, all arranged together and assembled to the Bottom Channel **290** from below. Assembling the Bottom Channel to the honeycomb can be accomplished through a simple method. Taking the Bottom Channel **290** at first, and then manually taking the Frontal Piece **270** and put it on top of the Bottom Channel **290** at its very back in a way that the lowest edges **273** and **274** of the Frontal Piece **270** and the edges **273** and **274** of the Bottom Channel **290** combine respectively and become attached to each other. From that point, manually likewise, moving the Frontal Piece **270** across the edges **293** and **294** all the way to the frontal position of the Bottom Channel where it belongs. After that, manually as well, taking a First Movable Piece **60** and a Second Movable Piece **70** and just arranging them next to the Frontal Piece in a way that their frontal side touch the back side of the Frontal Piece. Next, taking a Fixed Piece **50,** and similarly to the Frontal Piece, putting it on top of the Bottom Channel **290** at its very back in a way that the lowest edges **103** and **104** of the Fixed Piece and the edges **273** and **274** of the Bottom Channel **290** combine respectively and become attached to each other, exactly like in **Fig. 31****.** Then, manually moving that Fixed Piece across the edges **293** and **294** until its frontal side touches the back side of the First Movable Piece and the Second Movable Piece and its header **55** meets the header **275** of the Frontal Piece, and its footers **56** and **57** meet the footers **276** and **277** of the Frontal Piece, in a way that both Pieces **50** and **270** become assembled together through their gendered connections. After that, the process of this arrangement gets repeated by placing a multitude of the pieces **50, 60** and **70** over and over again in the same way until the Bottom Channel becomes nearly full, having only one place remaining for the Posterior Piece **280,** which is the last piece in the array. The Posterior Piece **280** can be assembled to the Bottom Channel and to the array of the comb fragments the same way. What is more is that the snap **299** existing at the very back of the Bottom Channel and the protruded element **289** of the Posterior Piece **280** illustrated in **Figs. 28C, 28D** and **28E****,** together they form some sort of assembly that keeps the pieces of the honeycomb tight, while at the same time, giving the possibility to dis-assemble the whole array and unbreak its pieces.

While the snap **299** and the protruded part **289** form some kind of assembly that holds the comb fragments tight from their lowest level, the cord **307** shown in **Figs. 30****,** **33** and **34** being warped around the top of the frame through the holes **91** of the Fixed Pieces, the Frontal Piece and the Posterior Piece and fastened at the very back holds the frame tight together from its upper level.

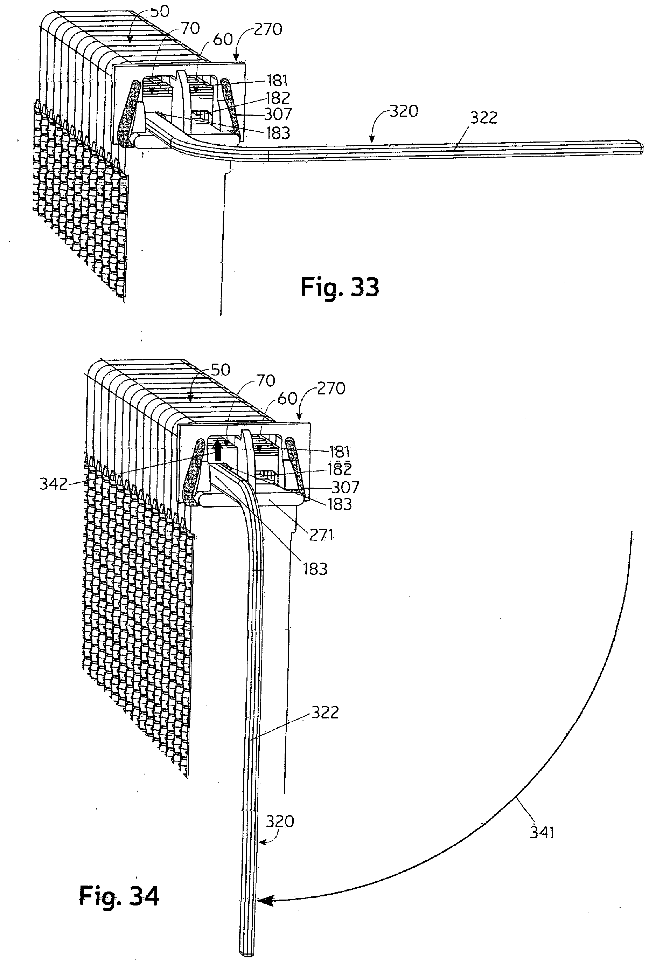

Moving now to **Figs. 32A** and **32B****,** which illustrate the bar tool **320.** This tool is a single piece made of stainless steel in the form of "L". The long part **321** is the operating part, and the short part **322** is the handle. As **Fig. 32B** shows, the bar tool has a rectangular section with rounded corners. The function of the bar tool **320** is to actuate the forward mechanism as well as the backward mechanism. **Figs. 33** and **34** demonstrate how this process works. In **Fig. 33****,** both comb sides of the frame are in a closed-cell position, wherein, the First Movable Pieces **60** and the Second Movable Pieces **70** are in their original position. Moreover, the operating part **321** of the bar tool is inserted across the opening **279** of the Frontal Piece all the way through the slot **183** corresponding to the array of the Second Movable Pieces **70.** Manually rotating the bar tool by 90° according to the arrow **341** in **Fig. 34** actuates the forward mechanism, causing the array of the Second Movable Pieces **70** to move up as the small arrow **342** indicates, just like in **Fig. 20****.** Therefore, this elevation causes the comb on the Second Movable Pieces side to split, changing the position of its cells from closed to open, as **Fig. 26** shows the detail of it. As a result, the honey stored in that comb side leaves the cells by flowing down to the Bottom Channel **290** and eventually pouring out of the frame through the drainage opening **292.** Meanwhile, the other comb side corresponding to the array of the First Movable Pieces **60** remains unaffected in its closed-cell position.

After rotating the bar tool **320** inside the slot **183,** causing the cells to split, it is okay to remove it from that lower slot **183,** as the Second Movable Pieces become stuck and immovable when they are elevated. Same feature applies to the First Movable Pieces **60** on the other comb side.

After rotating the bar tool **320** inside the slot **183** causing the cells to split, the honey takes few minutes to clear the comb. Afterwards, when the cells become empty, they have to go back to their original position by applying the backward mechanism. To do that, the operating part **321** of the bar tool needs to be inserted in the upper slot **181** across the opening **279** of the Posterior Piece and then rotated by 90°, similarly to the previous rotation. This action causes the Second Movable Pieces **70** to get back to their original position and the corresponding cells change position from open to closed.

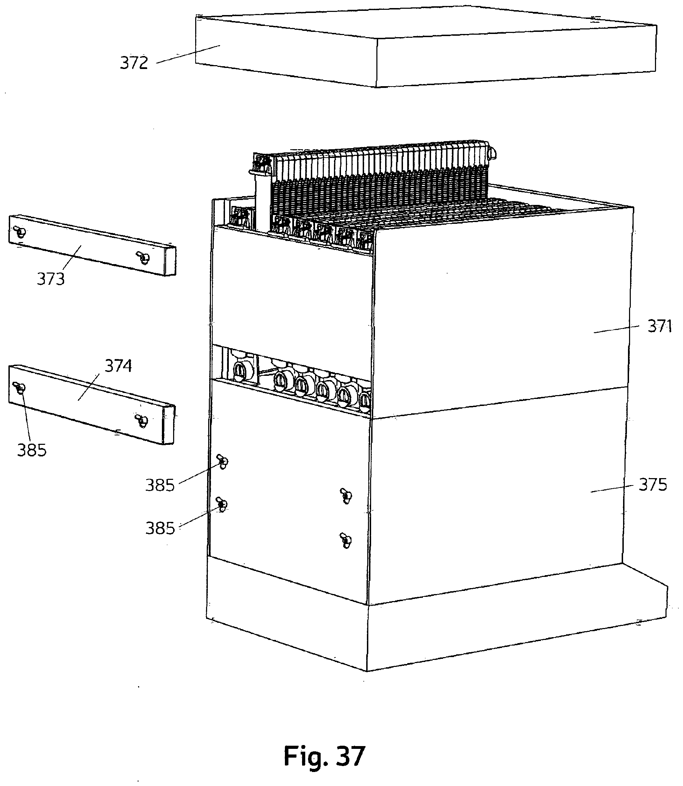

Referring now to **Fig. 37****,** not falling under the claimed invention, which illustrates a beehive wherein, its honey super **371** contains several artificial honeycomb frames of the present invention. The honey super box **371** comprises two removable panels **373** and **374** on its front. Panel **373** positioned at the level of the header of the frames that provides access to the bar tool **320** to be inserted inside the slots of the frames when it is removed. Panel **374** is positioned at the level of the Bottom Channels in order to provide access to the honey to pour outside the beehive when it is removed.

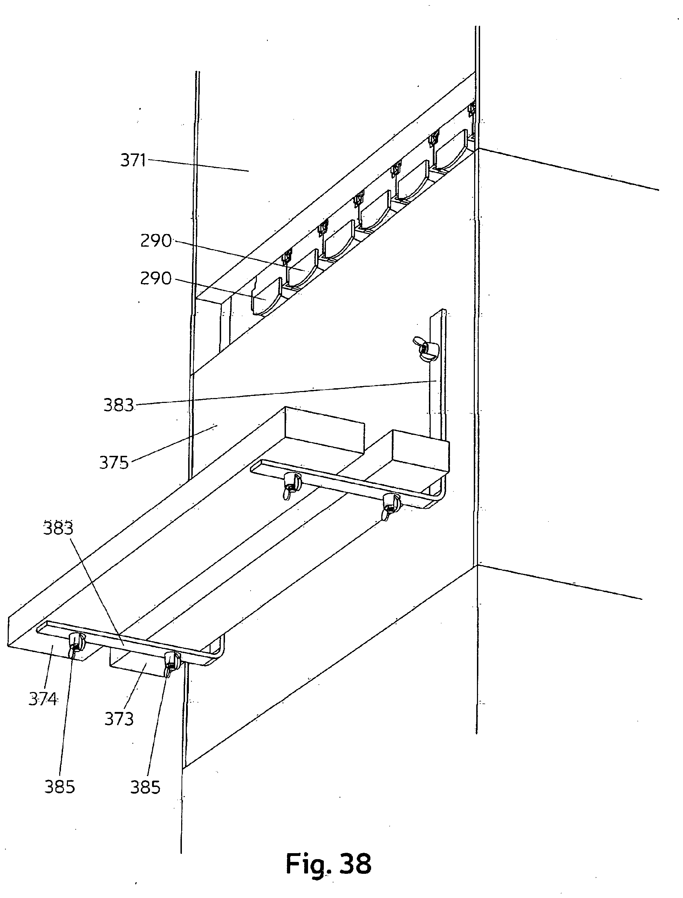

The Panels **373** and **374** have an additional role. But before that, the beekeeper needs to select the sides of the frames that are filled with ripe honey and then removing the corresponding upper caps **308** and/or **309** beforehand in order to provide access of the bar tool **320** to go inside. Also, the lid **350** needs to be removed from each frame selected in orderto put in the tubes that will transfer the extracted honey to the containers. After knowing which comb sides to extract honey from, the beekeeper needs to install a shelf that supports the containers of the honey, which represents the second role of the panels **373** and **374.** **Fig. 38****,** not falling under the claimed invention, illustrates the setup of this shelf using these two panels **373** and **374,** fixed from the bottom to the pair of supports **383** using several wing fasteners **385** that can be fastened manually. All the shelf setup can be fixed to the frontal side of the brood box **375** with several other wing fasteners **385.** This shelf has a capacity to easily lift dozens of kilograms and it can be set and disband manually.

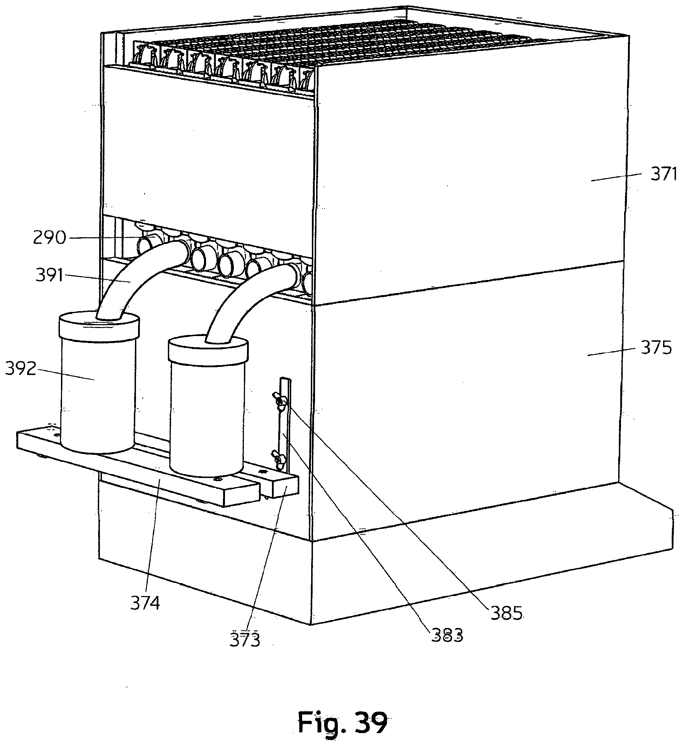

After inspecting the frames and installing the shelf comes the harvesting process, as it is illustrated in **Fig. 39****,** not falling under the claimed invention.

Several honey containers **392** can be placed on the shelf, then connected directly to the drainage openings **292** of the Bottom Channels inside the honey super through particular tubes **391** that will transfer the extracted honey from the Bottom Channels directly to those containers **392.**

The provided embodiment of this invention is intended to be explaining and not limiting, as for future modifications or adjustments could possibly be made, without diverging from the core of the invention.

### Manufacturing the present invention:

In total, the pieces that fundamentally constitute the present invention are a Fixed Piece, a First Movable Piece, a Second Movable Piece, a Frontal Piece, a Posterior Piece, a Bottom Channel and 3 lids. All these pieces will be produced in plastic, Polypropylene type. Also, they will be manufactured with the same industrial process through plastic injection molding. Injection molding is, by the way, one of the most popular techniques for making plastic parts.

## Claims

1. An artificial honeycomb **characterised in that** the artificial honeycomb comprises 3 kinds of comb fragments (50,60,70) wherein, one of them is a double-sided comb fragment and the other two are one-sided comb fragments, the one-sided comb fragments being movable relative to each other and being also movable relative to the double-sided comb fragment, to independently change the cells position on both sides of the honeycomb from closed to open and vice versa.

2. An artificial honeycomb according to claim 1, whose both sides can split from a closed-cell position to an open-cell position and vice versa wherein, each of those two sides has its own working process that is unconnected to the other side.

3. An artificial honeycomb according to claim 1, whose three kinds of comb fragments define 3 slots (181, 182, 183) at the level of their headers when arranged, with two lower slots and an upper one above them.

4. An artificial honeycomb according to claim 1 wherein, the two movable one-sided comb fragments can be stuck when the honeycomb switches to an open-cell position to thereby let the honey clear the cells.

5. An artificial honeycomb according to claim 2 comprising a bottom channel (290) that can be assembled and dis-assembled from the honeycomb, which conveys honey out and holds the fragments of the honeycomb together.

6. An artificial honeycomb according to claim 5 comprising a lid (350) that can leak honey as it plugs the drainage opening of the bottom channel to thereby get it fed to the bees inside the hive and keep the bottom channel (290) totally empty.

## Patentansprüche

1. Künstliche Honigwabe, **dadurch gekennzeichnet, dass** die künstliche Honigwabe drei Arten von Wabenfragmenten (50, 60, 70) umfasst, wobei eines von diesen ein doppelseitiges Wabenfragment ist und die anderen beiden einseitige Wabenfragmente sind, wobei die einseitigen Wabenfragmente relativ zueinander bewegbar sind und außerdem relativ zum doppelseitigen Wabenfragment bewegbar sind, um die Position der Zellen auf beiden Seiten der Honigwabe von geschlossen zu offen und umgekehrt zu ändern.

2. Künstliche Honigwabe nach Anspruch 1, wobei sich beide Seiten von einer geschlossenen Stellung der Zellen zu einer offenen Stellung der Zellen und umgekehrt teilen können, wobei jede der beiden Seiten einen eigenen Arbeitsprozess aufweist, der unabhängig von der anderen Seite ist.

3. Künstliche Honigwabe nach Anspruch 1, wobei drei Arten von Wabenfragmenten drei Schlitze (181, 182, 183) auf der Ebene ihrer Kopfseiten definieren, wenn diese angeordnet sind, mit zwei unteren Schlitzen und einem oberen, der über diesen angeordnet ist.

4. Künstliche Honigwabe nach Anspruch 1, wobei die zwei beweglichen einseitigen Wabenfragmente festsitzend sein können, wenn die Honigwabe zu einer offenen Stellung der Zellen wechselt, damit der Honig aus den Zellen austreten kann.

5. Künstliche Honigwabe nach Anspruch 2, die einen Bodenkanal (290) umfasst, der an der Honigwabe befestigt und von dieser gelöst werden kann und der Honig herausleitet und die Fragmente der Honigwabe zusammenhält.

6. Künstliche Honigwabe nach Anspruch 5, die einen Deckel (350) umfasst, der Honig austreten lassen kann, wenn er die Ablassöffnung des unteren Kanals verschließt, um ihn den Bienen im Bienenstock zu füttern und den Bodenkanal (290) vollständig leer zu halten.

## Revendications

1. Nid d'abeilles artificiel **caractérisé en ce que** le nid d'abeilles artificiel comprend 3 types de fragments de peigne (50, 60, 70), dans lequel l'un d'eux est un fragment de peigne bilatéral et les deux autres sont des fragments de peigne unilatéraux, les fragments de peigne unilatéraux étant mobiles l'un par rapport à l'autre et étant également mobiles par rapport au fragment de peigne bilatéral, pour changer indépendamment la position des alvéoles des deux côtés du nid d'abeilles de fermée à ouverte, et vice versa.

2. Nid d'abeilles artificiel selon la revendication 1, dont les deux côtés peuvent se séparer d'une position d'alvéoles fermées à une position d'alvéoles ouvertes, et vice versa, dans lequel chacun de ces deux côtés présente son propre processus de travail qui n'est pas connecté à l'autre côté.

3. Nid d'abeilles artificiel selon la revendication 1, dont les trois types de fragments de peigne définissent 3 fentes (181, 182, 183) au niveau de leurs collecteurs lorsqu'ils sont agencés, avec deux fentes inférieures et une supérieure au-dessus d'elles.

4. Nid d'abeilles artificiel selon la revendication 1, dans lequel les deux fragments de peigne unilatéraux mobiles peuvent être coincés lorsque le nid d'abeilles passe dans une position d'alvéoles ouvertes pour permettre ainsi au miel de dégager les alvéoles.

5. Nid d'abeilles artificiel selon la revendication 2, comprenant un canal inférieur (290) qui peut être assemblé et désassemblé par rapport au nid d'abeilles, qui transporte le miel vers l'extérieur et maintient les fragments du nid d'abeilles ensemble.

6. Nid d'abeilles artificiel selon la revendication 5, comprenant un couvercle (350) qui peut faire fuir le miel lorsqu'il bouche l'ouverture de drainage du canal inférieur pour ainsi l'alimenter aux abeilles à l'intérieur de la ruche et maintenir le canal inférieur (290) totalement vide.
